# EUROPÄISCHE PATENTSCHRIFT

(11) **EP 1 368 110 B1**
(45) Veröffentlichungstag und Bekanntmachung des Hinweises auf die Patenterteilung: **10.01.2007**
(21) Anmeldenummer: 02701184.0
(22) Anmeldetag: 12.01.2002
(51) Int. Cl.: B01D 67/00, B01D 71/64, C08L 79/08

(54) **FUNKTIONALISIERTE POLYIMID-FORMKÖRPER UND FUNKTIONALISIERTE POLYIMID-MEMBRAN**
FUNCTIONALISED POLYIMIDE MOULDED BODY AND FUNCTIONALISED POLYIMIDE MEMBRANE
CORPS MOULE FONCTIONNALISE ET MEMBRANE POLYIMIDE FONCTIONNALISEE

(30) Priorität: 09.03.2001 DE 10111665
(43) Veröffentlichungstag der Anmeldung: 10.12.2003
(73) Patentinhaber: GKSS-Forschungszentrum Geesthacht GmbH, 21502 Geesthacht (DE)
(72) Erfinder: ALBRECHT, Wolfgang, 14513 Teltow (DE); DAHMS, Lars-Ingemar, D-14057 Berlin (DE); LÜTZOW, Karola, 12167 Berlin (DE); WEIGEL, Thomas, 14557 Wilhelmshorst (DE); HILKE, Roland, 14513 Teltow (DE); PAUL, Dieter, 14532 Kleinmachnow (DE)
(74) Vertreter: Seemann, Ralph
(86) Internationale Anmeldenummer: PCT/DE2002/000077
(87) Internationale Veröffentlichungsnummer: WO 2002/072246

(56) Entgegenhaltungen:
- EP-A- 0 401 005
- DE-A- 4 117 501
- US-A- 4 853 127

## Beschreibung

Die Erfindung betrifft einen porösen Polyimid-Formkörper, insbesondere eine poröse Polyimid-Membran, der bzw. die mit einer chemischen Gruppe funktionalisiert ist, sowie ein Verfahren zu deren Herstellung.

Polyimide mit unterschiedlicher chemischer Zusammensetzung sind seit langem bekannt und im Handel erhältlich. Aus derartigen Polyimiden können durch Schmelzverformung die unterschiedlichsten Formkörper hergestellt werden. Ein wesentliches Anwendungsgebiet von Polyimiden betrifft die Herstellung von Spritzgussformkörpern sowie von Membranen.

Polyimide unterschiedlichen Aufbaus lassen sich über einen Phaseninversionsprozess leicht zu Membranen mit unterschiedlichen Trenneigenschaften verformen. Ein bekanntes Verfahren zur Herstellung integralsymmetrischer Polyetherimid-Membranen ist beispielsweise in der DE-A 34 20 373 beschrieben. Diese bekannten Membranen können beispielsweise nach Beschichtung mit Polydimethylsiloxan für die Gastrennung eingesetzt werden.

Eine weitere Polyimid-Membran sowie ein Verfahren zu deren Herstellung ist in der DE-A 37 16 916 beschrieben. Diese bekannte Membran dient vorzugsweise für die Ultrafiltration und als beschichtbare Trägermembran für die Herstellung von Composite-Membranen.

In EP-A-O 401 005 wird ein Verfahren zur Modifikation einer Polyimid-Membran offenbart, in dem der Membran Amino-Verbindungen mit 1 bis 5000 Amino-Gruppen zugefügt werden. Die so modifizierten nicht porösen Membranen werden zur Trennung unterschiedlicher Gassorten eingesetzt

Polyimide sind im Allgemeinen relativ hydrophobe, mit Wasser schlecht benetzbare Polymere. Daher kommt es bei der Filtration wässriger Lösungen zu Benetzungsproblemen und insbesondere zur unspezifischen Adsorption von Lösungsinhaltsstoffen (fouling), wodurch eine beachtliche Leistungsabnahme der Membran hervorgerufen wird. Aus der US-A-4 798 847 ist nun ein Verfahren zur Herstellung von Polyimid-Membranen bekannt, bei dem dem hydrophoben Grundpolymer ein hydrophiler, zumindest zum Teil in der fertigen Membran verbleibender Stoff, insbesondere Polyvinylpyrrolidon, zugesetzt wird, der zur Leistungssteigerung der Membran vernetzt und auf diese Weise in der Membran fixiert wird. Derart hydrophil modifizierte Polyimid-Membranen sind für die Ultra- und/oder Mikrofiltration geeignet.

Polyimid-Membranen enthalten üblicherweise jedoch keine aktiven, funktionellen Gruppen, wie beispielsweise Amin-, Hydroxyl-, Carboxyl-, Aldehyd- und andere reaktive Gruppen. Daher sind diese bekannten Polyimid-Membranen auch nicht zur Erzeugung von Affinitätsmembranen geeignet.

Polyimide enthalten zwar üblicherweise funktionalisierbare Bausteine. Die zur Einführung von funktionellen Gruppen erforderlichen chemischen Umsetzungen sind jedoch entweder zeitaufwendig, schwierig oder nicht kontinuierlich durchzuführen, gesundheitsgefährdend oder die zu funktionalisierende Membran schädigend.

Allerdings ist aus der DE-A 41 17 501 eine unter Verwendung von Amin modifizierte Polyimid-Membran bekannt, die für die Gastrennung und Ultrafiltration eingesetzt werden kann. Zur Herstellung dieser Membran geht man von einer homogenen Polyimid-Lösung aus, in der eine organische, mehrfunktionelle Verbindung mit mindestens zwei primären Amingruppen pro Molekül in einer Konzentration von 0,05 bis 5 % der Reaktionsmischung eingebracht und gelöst ist. Dieses Substanzgemisch lässt man dann 1 h bis 10 Tage reagieren, wobei unter praktisch vollständigem Verbrauch der Aminogruppen der organischen, mehrfunktionalen Verbindung die Polyamid-Makromoleküle verzweigt/vernetzt werden, als deren Folge die Viskosität der Polyimidlösung erhöht wird. Es hat sich jedoch gezeigt, dass die Menge an modifizierender Aminverbindung in der homogenen Lösung sehr genau dosiert werden muss und je nach verwendeter Aminverbindung relativ gering sein muss, um lösliche, zu Membranen verarbeitbare, Polymerlösungen zu erhalten. Bei einer Überdosierung geliert die homogene Lösung zu einem unlösbaren Gel. Diese membranbildende Polymerlösung eignet sich zur Membranbildung auch aus verdünnten Polymerlösungen, ohne dass diese Lösung dann auch einen textilen Support durchdringt. Da die Amin-haltigen Modifikationen unter Verbrauch aller Amin-Funktionen reagieren, ist der Anteil an freien Amin-Gruppen an den Oberflächen der formierten Membran gering, praktisch Null, so dass diese Membran in dieser Form bzw. unter Nutzung der möglicherweise vorhandenen Restamingruppen nicht geeignet ist.

Aufgabe der vorliegenden Erfindung ist es, einen funktionalisierten porösen Polyimid-Formkörper und insbesondere eine funktionalisierte poröse Polyimid-Membran bereitzustellen, die gezielt einstellbar funktionalisiert werden kann und über einen hohen Funktionalisierungsgrad an ihrer Oberfläche verfügt. Aufgabe der Erfindung ist es ferner, ein Verfahren zur Herstellung dieses Polyimid-Formkörpers bzw. dieser Polyimid-Membran bereitzustellen, mit dem diese Funktionalisierung in einfacher und ökonomischer Weise in einem wässrigen Medium erfolgen kann.

Gelöst wird diese Aufgabe durch die unabhängigen Ansprüche.

Die erfindungsgemäßen porösen Formkörper bzw. Membranen können in der funktionalisierten Form direkt für vielfältige Aufgaben im technischen, biotechnologischen und medizinischen Bereich sowie in Form einer funktionalisierten Membran als Ausgangsmembran für die Herstellung von Affinitätsmembranen eingesetzt werden.

Die Erfindung wird nachstehend anhand einer porösen Polyimid-Membran näher erläutert, wobei dieser Begriff "Polyimid-Membran" stellvertretend für einen Polyimid-Formkörper steht, sofern nichts anderes angegeben ist oder sich aus dem Gesamtzusammenhang ergibt.

Die erfindungsgemäße poröse Polyimid-Membran ist erhältlich aus einer zuvor fertig gestellten porösen Polyimid-Membran, die per se bekannt sein kann. Die Polyimid-Membran wird mit einer wäßrigen Modifikator-Lösung in Kontakt gebracht, in der mindestens eine Modifikator-Substanz gelöst ist. Die Modifikator-Substanz weist mindestens eine Aminogruppe pro Molekül der Modifikator-Substanz sowie gegebenenfalls zusätzlich mindestens eine weitere funktionelle Gruppe pro demselben Molekül der Modifikator-Substanz auf. Mit anderen Worten, jede Modifikator-Substanz enthält einerseits eine primäre oder sekundäre Aminogruppe und andererseits eine weitere funktionelle Gruppe. Allerdings kann es sich bei dieser weiteren funktionellen Gruppe ebenfalls um eine derartige Aminogruppe handeln.

Die Polyimid-Membran wird während des Inkontaktbringens oder nach dem Inkontaktbringen mit der Modifikator-Lösung auf eine erhöhte Temperatur gebracht sowie anschließend gereinigt und getrocknet.

Die Modifikator-Lösung wird für einen Zeitraum von 1 sec. bis 1 h, vorzugsweise von 5 sec. bis 10 min. mit der Modifikator-Lösung kontaktiert und dabei gleichzeitig und/oder nachfolgend für einen Zeitraum von vorzugsweise 1 sec. bis 1 h, insbesondere bevorzugt von 5 sec. bis 10 min. einer Temperatur von vorzugsweise 50 - 100°C und insbesondere bevorzugt von 70 - 90°C ausgesetzt und dadurch behandelt.

Die Reinigung der auf diese Weise funktionalisierten Polyimid-Membran von nicht formkörperbildenden bzw. nicht membranbildenden Stoffen mit Ausnahme von Wasser sowie von Hilfsstoffen aus der kontaktierenden Modifikator-Lösung und/oder anderen Behandlungslösungen erfolgt vorzugsweise durch Waschen, Extrahieren und ähnlichem aus der Membran.

Die gereinigte Membran wird dann getrocknet. Sie kann jedoch auf vor dem Trocknen mit an sich bekannten porenerhaltenden Substanzen imprägniert werden.

Die Konzentration der Modifikator-Substanz bzw. der Modifikator-Substanzen in der Modifikator-Lösung beträgt vorzugsweise 0,1 - 20 Gew.-% und weiterhin bevorzugt 1 - 10 Gew.-%. Die auf diese Weise erhaltene funktionalisierte Polyimid-Membran kann erforderlichenfalls in einer zusätzlich Nachbehandlungsstufe mit weiteren, an sich bekannten Behandlungslösungen behandelt werden, um beispielsweise eine in Salzform vorliegende Funktion der Modifikator-Substanz in die Säureform zu überführen oder um eine neutrale Funktion beispielsweise durch Quarternierung in eine ionische Form zu überführen.

Die erfindungsgemäßen erhältliche Polyimid-Membran ist je nach Art der eingesetzten Modifikator-Substanz bzw. Modifikator-Substanzen entsprechend funktionalisiert und stellt im allgemeinen eine poröse Membran mit einem hohen Gehalt an funktionellen Gruppen dar. Die erfindungsgemäße Polyimid-Membran kann bereits in dieser Form als adsorptive Membran eingesetzt werden. Zudem können die gezielt einstellbaren, je nach Reaktionsführung normalerweise in hoher Zahl frei verfügbaren funktionellen Gruppen, die sich auf den Membran- und Porenoberflächen befinden, für Folgereaktionen zur Koppelung weiterer, selektiv oder spezifisch adsorbierender Funktionen verwendet werden. Im Falle von Polyimid-Formkörpern befinden sich diese funktionellen Gruppen primär auf der Formkörperoberfläche. Bei porösen Membranen sind die funktionellen Gruppen - je nach Verfahrensführung - gleichmäßig oder asymmetrisch über den Membranquerschnitt verteilt, worauf nachstehend noch näher eingegangen wird. Mit der Wahl der Porengröße der als Ausgangsmembran eingesetzten Polyimid-Membran und somit der zu modifizierenden Polyimid-Membran und der Größe des Moleküls der Modifikator-Substanz in der Modifikator-Lösung hat man die Möglichkeit, bei Verwendung einer trockenen Polyimid-Membran und vorzugsweise kurzen Behandlungszeiten das Eindringen der ModifikatorSubstanz in die Unterstruktur der Membran gezielt derart zu steuern, daß eine asymmetrische Verteilung der funktionellen Gruppen über den Membranquerschnitt realisiert wird. Daher wird vorzugsweise eine asymmetrische Polyimid-Membran als Ausgangsmembran bzw. als zu modifizierende Membran eingesetzt. Die Porengröße der als Ausgangsmembran dienenden asymmetrischen PolyimidMembran ist dabei in der trennaktiven Schicht vorzugsweise kleiner als die Größe des Moleküls der Modifikator-Substanz. Dies bedeutet mit anderen Worten, daß eine Membran als Ausgangsmembran bzw. Ausgangsmaterial eingesetzt wird, die einen beachtlichen Rückhalt gegenüber den Molekülen der Modifikator-Substanz aufweist, wobei diese Membran vorzugsweise von der Supportseite her mit der Modifikator-Lösung kontaktiert wird.

Bei Verwendung einer asymmetrischen Membran, die von der Unterstruktur her wie oben beschrieben behandelt wird, ist folglich eine abnehmende Porengröße auch mit einer abnehmenden Zahl an frei verfügbaren Funktionen verbunden. Die höchste Anzahl an frei verfügbaren Funktionen befindet sich daher auf der während der Modifizierung im unmittelbaren Kontakt mit der Modifikator-Lösung stehenden Membranoberfläche.

Bei einer weiteren bevorzugten Ausführungsform ist eine asymmetrische Verteilung der funktionellen Gruppen über den Membranquerschnitt dadurch erhältlich, daß - im Gegensatz zu der oben beschriebenen Variante, bei dem im allgemeinen eine trockene Polyimid-Membran eingesetzt wird - das Porensystem der trockenen Polyimid-Membran mit einer gut benetzenden, vorzugsweise wäßrigen Lösung gefüllt wird, bevor die Polyimid-Membran mit der Modifikator-Lösung in Kontakt gebracht wird. In Verbindung mit kurzen Kontaktzeiten der Polyimid-Membran in der Modifikator-Lösung werden in diesem Falle, ohne daß ein Rückhalt der Polyimid-Membran gegenüber den Molekülen der Modifikator-Substanz nachgewiesen werden kann und unabhängig von der Struktur der Polyimid-Membran vorzugsweise die kontaktierte Membranoberfläche und der daran angrenzende Teil des Membranquerschnittes modifiziert. Auf diese Weise wird ebenfalls eine asymmetrische Modifizierung der Polyimid-Membran erreicht.

Werden Modifikator-Substanzen mit hydrophilen funktionellen Gruppen eingesetzt, dann besitzt die derart modifizierte Polyimid-Membran außerdem vorteilhafterweise einen geringeren Unterwasser-Kontaktwinkel. Dadurch verfügt diese modifizierte Membran über eine bessere Benetzbarkeit, eine geringere Tendenz zum Fouling, eine geringere unspezifische Adsorption von abzutrennenden Lösungsinhaltsstoffen sowie eine geringere Porenverblockung. Andererseits kann durch gezielte Wahl hydrophober Gruppen der Unterwasser-Kontakt-Winkel auch erhöht werden, wenn eine Funktionalisierungszeit unter 60 sec. gewählt wird, so daß derartige modifizierte Membranen vorteilhaft zur gezielten Adsorbtion hydrophober Substanzen aus wäßrigen Medien verwendet werden können.

Wenn im Rahmen dieser Unterlagen von einem Polyimid bzw. einem Polyimid-Formkörper oder von einer Polyimid-Membran die Rede ist, so umfaßt der Begriff "Polyimid" neben den reinen Polyimiden auch solche Stoffklassen, die neben den Imid-Gruppen auch andere Gruppen enthalten. Dazu zählen beispielsweise Poly(amid-imide), Poly(ester-imide), Poly(ether-imide) und Mischprodukte (Polymerblends). Erfindungsgemäß ist es lediglich erforderlich, daß zumindest ein Anteil des/der formkörperbildenden bzw. membranbildende(n) Polymer(e) in der Polymerkette Imid-Gruppen aufweisen. Folglich kann jede, diese Imid-Funktion aufweisende Membran mittels der erfindungsgemäßen Modifizierung funktionalisiert werden. Vorzugsweise werden jedoch Formkörper bzw. Membranen aus reinen Polyimiden eingesetzt. Beim Formkörper ist dessen Form beliebig. Es ist lediglich erforderlich, daß überhaupt eine Kontaktierung mit der Behandlungslösung möglich ist. Als Ausgangsmembranen können beliebige Membranen eingesetzt werden. Es kann sich dabei um Hohl- oder Schlauchmembranen oder auch um Flachmembranen mit oder ohne Trägervlies handeln.

Die erfindungsgemäß zum Einsatz gebrachten Modifikator-Substanzen enthalten mindestens eine primäre oder sekundäre Amino-Gruppe. Weist die Modifikator-Substanz nur eine Amino-Gruppe auf und besteht sie ansonsten aus einem keine funktionellen Gruppen aufweisenden Kohlwasserstoffrest, dann kann man diesen Kohlenwasserstoffrest quasi auch als weitere funktionelle Gruppe betrachten. Setzt man ein derartiges Monoamin zur Modifizierung ein, kann man die hydrophoben Eigenschaften der derart modifizierten Membranen verbessern.

Die erfindungsgemäß eingesetzten Modifikator-Substanzen besitzen vorzugsweise die folgenden allgemeinen Formeln

R₁ - NH - (Y₁)ₙ

R₁ - NH - X - (Y₂)ₘ,

worin R₁ ein Wasserstoffatom oder einen aliphatischen oder aromatischen Kohlenwasserstoffrest mit bis zu 6 C-Atomen bedeutet, Y₁ einen Kohlenwasserstoffrest mit 6 oder mehr C-Atomen bedeutet, Y₂ für eine -NH₂-, -NHR₁-, -NH(R₂)₂-, -OH-, -CH₂OH-, -CO(OH)-, -SO₂(OH)-, oder -PO₃(OH)-Gruppe oder fluorierte Gruppe, wobei R₂ einen aliphatischen oder aromatischen Kohlenwasserstoffrest beliebiger Art bedeutet und insbesondere für R₁ steht, X einen geradkettigen oder verzweigten Kohlenwasserstoffrest, der die R₁-NH-Gruppe mit der oder den (Y₂)-Gruppe(n), die endständig oder seitlich an eine Kette gebunden sein können, verbindet und in einer Seitenkette und der Hauptkette durch ein oder mehrere 0- oder N-Heteroatome unterbrochen sein können, n für 1 oder 2 steht und m für 1, 2 oder 3 steht.

Die divalente Gruppe X, welche die Amin-Gruppe mit einer weiteren funktionellen Gruppe Y₂ linear und/oder über Ringsysteme verbindet, kann somit beliebiger Natur sein. Vorzugsweise handelt es sich dabei um einen aliphatischen und/oder aromatischen Kohlenwasserstoff-Rest, der die genannten Heteroatome aufweisen kann und zudem CO-, C(OH)-, CO(OH)- und PO₃(ON)-Gruppen besitzen kann. Insbesondere werden X-Gruppen mit Amin- oder Äthergruppen in Nachbarschaft zu kurzkettigen, aliphatischen Kohlenwasserstoffketten mit einem hohen Anteil an Heteroatomen aus der Substanzklasse der Polyamine, beispielsweise Polyethylenimin bzw. ethoxylierte Amine/Polyamine eingesetzt.

Nach einer bevorzugten Ausführungsform besitzen die erfindungsgemäß eingesetzten Modifikator-Substanzen die folgende allgemeine Formel:

R₁-HN-X-N-R₂,₃

Die Reste R₁ und X besitzen dabei die oben angegebenen Bedeutungen. Die Reste R₂ und R₃ bedeuten unabhängig voneinander jeweils ein Wasserstoffatom oder einen aliphatischen oder einen aromatischen Kohlenwasserstoffrest.

Die zur Modifizierung eingesetzten Modifikator-Substanzen müssen in dem zur Herstellung der Modifikator-Lösung verwendeten Lösemittel zumindest partiell löslich sein. Vorzugsweise sind die Modifikator-Substanzen in dem Lösemittel bzw. dem Lösemittelgemisch der Modifikator-Lösung vollständig löslich und bilden homogene und im Allgemeinen niederviskose Lösungen, deren pH ≥ 7 ist. Als Lösemittel wird normalerweise Wasser zur Anwendung gebracht. Im Hinblick auf eine gleichmäßige, kurzzeitige Behandlung ist es vorteilhaft, wässrige Lösemittel mit Anteilen an mit Wasser vollständig mischbaren, kurzkettigen mono- oder polyfunktionellen Alkoholen einzusetzen. Der Anteil dieser Alkohole beträgt vorzugsweise 10 bis 90 Gew.-%, weiterhin bevorzugt 20 - 50 Gew.-% im Lösemittelgemisch für den oder die Modifikator-Substanz(en).

Gegenstand der Erfindung ist auch ein Verfahren zur Herstellung der erfindungsgemäßen modifizierten porösen Polyimid-Formkörper und insbesondere der modifizierten Polyimid-Membranen. Bei diesem Verfahren werden die oben näher beschriebenen Verfahrensschritte durchgeführt.

Die Erfindung wird nachstehend anhand der aufgeführten Beispiele zur Herstellung von modifizierten Polyimid-Membranen ausgehend von Polyetherimid-Membranen näher erläutert. Dabei gelangen Di- bzw. Polyamine als Modifikator-Substanzen zur Anwendung. Diese modifizierenden Amine stehen jedoch lediglich beispielhaft und dienen primär zur Erläuterung des Grundprinzips zum Erhalt der erfindungsgemäß modifizierten Polyimid-Formkörper bzw. Polyimid-Membranen. Bei dem zur Anwendung gebrachten Polyetherimid handelt es sich um Ultem 1000 (General Electric), aus dem in bekannter Weise ebenflächige Membranen auf Histar-Trägermaterial formiert wurden.

Zur Charakterisierung der Ausgangsmembranen und der erfindungsgemäß modifizierten Membranen wurden deren Wasserpermeabilität und Porencharakteristik mit Wasser bzw. unter Verwendung einer Mischung aus Dextranen nach bekannten Verfahren gemessen sowie an ausgewählten Beispielen der Gehalt an funktionellen Gruppen durch titrimetrische Bestimmung ermittelt. Zur Bewertung der Asymmetrie der Funktionalisierung wurde ein qualitativer Färbetest unter Verwendung von Orange II (Uchida et al. Langmuir 9 (1993) 1121-1124) herangezogen.

### Beispiel 1 (Vergleichsbeispiel)

Kommerziell erhältliche Flachmembranen (Hersteller: GKSS Forschungszentrum Geesthacht GmbH) aus Polyetherimid (Ultem 1000, General Electric) auf Histar 80 wurden als Ausgangsmembran für die Modifizierung eingesetzt. Membranen unterschiedlicher Herstellung mit unterschiedlichen Trenneigenschaften wiesen in dieser unmodifizierten Form folgende Kenndaten auf:

| Flachmembran 1: | | |
|---|---|---|
| Wasserdurchlässigkeit: | | 0,75 l/m²hkPa |
| Mittlere Porengröße: | | 2,64 nm |
| cut-off: | | 23,2 kg/mol |
| Polymermenge/cm² Membranfläche: | | 4,178*10⁻³ g/cm² |
| Kontaktwinkel: | Fortschreitwinkel: | 82° - 86° |
| | Rückzugswinkel: | 52° - 57° |

| Flachmembran 2: | | |
|---|---|---|
| Wasserdurchlässigkeit: | | 2,43 l/m²hkPa |
| Mittlere Porengröße: | | 2,58 nm |
| cut-off: | | 70,4 kg/mol |
| Polymermenge/cm² Membranfläche: | | 4,578*10⁻³ g/cm² |
| Kontaktwinkel: | Fortschreitwinkel: | 82° - 86° |
| | Rückzugswinkel: | 52° - 57° |

Des weiteren wurde eine Hohlmembran für die Untersuchungen herangezogen. Diese Hohlmembran wurde wie folgt hergestellt: Aus einer Polyetherimid-Spinnlösung wurde unter Verwendung von Wasser (Raumtemperatur) als Lumenfüller und einem Gemisch aus 45 Teilen Dimethylformamid (DMF), 25 Teilen N-Methylpyrrolidon (NMP), 25 Teilen Gamma-Butyrolacton (GBL) und 5 Teilen Wasser als Fällbad mittels eines Naßspinnprozesses eine Hohlmembran ersponnen. Das Porensystem der äußeren Oberfläche dieser initial-gelfeuchten Hohlmembran wurde durch Gel/Sol/Gel-Behandlung (1. Bad: N-Methylpyrrolidon, 30°C; 2. Bad: Wasser, 80°C) geöffnet; es entsteht eine hochasymmetrische Hohlmembran mit innerer trennaktiver Schicht. Nach Auswaschen der nichtmembranbildenden Bestandteile mit Wasser wurde die Hohlmembran bei Raumtemperatur getrocknet. Die so hergestellte Ausgangshohlmembran (Hohlmembran 1) wies im unmodifizierten Zustand folgende charakteristische Daten auf:

| | | |
|---|---|---|
| Wasserdurchlässigkeit: | | 2,37 l/m²hkPa |
| Mittlere Porengröße: | | 3,23 nm |
| cut-off: | | 20,3 kg/mol |
| Kontaktwinkel: | Fortschreitwinkel: | 82° - 86° |
| | Rückzugswinkel: | 52° - 57° |

Diese Kenndaten der Ausgangsmembranen wurden zur Einschätzung der Veränderung von Membraneigenschaften als Folge der Modifizierung herangezogen.

### Beispiel 2

Die im Vergleichsbeispiel 1 untersuchte Flachmembran 1 wurde im trockenen Zustand, auf einer Metalltrommel montiert, von der Aktivschichtseite her mit einer Modifikator-Lösung, bestehend aus 2 Teilen 1,6-Diaminohexan, 49 Teilen Wasser und 49 Teilen 1-Propanol, bei 75°C für 30 sec. kontaktiert. Die unmodifizierte Membran besitzt keinen Rückhalt gegenüber dem als Modifikator-Substanz verwendeten 1,6-Diaminohexan. Nach der Modifizierungsreaktion wurde intensiv mit Wasser bei Raumtemperatur gespült, um an der Membran nicht kovalent gebundene Modifikator-Substanz zu entfernen. Diese modifizierte Membran wurde im feuchten Zustand hinsichtlich Trenneigenschaften und nach Trocknung hinsichtlich des Gehaltes an freien Aminogruppen untersucht. Die so modifizierte Membran wies folgende Kenndaten auf:

| | |
|---|---|
| Wasserdurchlässigkeit: | 1,43 l/m²hkPa |
| Mittlere Porengröße: | 3,5 nm |
| cut-off: | 156 kg/mol |
| Amin-Gehalt: | 0,0391 mmol/g Polymer |
| Kontaktwinkel: Fortschreitwinkel: | 82° |
| Rückzugswinkel: | 45° |

Die Verteilung des Modifikator-Substanz über dem Membranquerschnitt war entsprechend der qualitativen Einschätzung mittels Färbetest symmetrisch.

### Beispiel 3

Die im Beispiel 1 beschriebene Ausgangsmembran (Flachmembran 1) wurde entsprechend dem Beispiel 2 mit folgenden Unterschieden modifiziert:
- die Modifikator-Lösung bestand aus 2 Teilen Polyethylenimin (Molekulargewicht: 700g/mol), 49 Teilen-Wasser und 49 Teilen 1-Propanol und
- die Behandlung wurde 60 sec. durchgeführt.

Die unmodifizierte Membran besitzt gegenüber der Modifikator-Substanz nur einen geringen (praktisch keinen) Rückhalt (< 5%).

Folgende Kenndaten der modifizierten Membran wurden ermittelt:

| | |
|---|---|
| Wasserdurchlässigkeit: | 1,37 l/m²hkPa |
| Mittlere Porengröße: | 2,85 nm |
| cut-off: | 21,9 kg/mol |
| Amin-Gehalt: | 0,0273 mmol/g Polymer |

Die Verteilung der Modifikator-Substanz über den Membranquerschnitt war entsprechend der qualitativen Einschätzung mittels Färbetest symmetrisch.

### Beispiel 4 - 7

Die im Beispiel 1 beschriebene Membran (Flachmembran 1) wurde entsprechend diesen Beispielen mit folgenden Unterschieden modifiziert:
1. Die Modifikator-Lösung bestand aus 4 Teilen einer 50%-igen Polyethylenimin-Lösung in Wasser (Molekulargewicht: 750 000 g/mol), 47 Teilen Wasser und 49 Teilen 1-Propanol. Die unmodifizierte Membran besitzt praktisch einen vollständigen Rückhalt gegenüber der Modifikator-Substanz (> 95 %).
2. Die Membran wurde von der Supportseite her mit der Modifikator-Lösung unterschiedliche Zeiten bei 70°C kontaktiert.

Die so modifizierten Membranen wiesen die in Tabelle 1 zusammengestellten Kenndaten auf:

**Tabelle 1:**

| Kenndaten der nach den Beispielen 4 - 7 modifizierten Membranen | | | | | |
|---|---|---|---|---|---|
| Beispiel | Behandlungszeit (sec) | Wasserdurchlässigkeit l/m² hkPa | mittlere Porengröße (nm) | cut-off (kg/mol) | Amin-Gehalt (mmol/g Polymer) |
| 1 Vergleich | 0 | 0,75 | 2,64 | 23,2 | 0 |
| 4 | 5 | 0,41 | 1,74 | 12,9 | 0,032 |
| 5 | 30 | 0,21 | 1,08 | 7,5 | 0,041 |
| 6 | 600 | 0,20 | 0,80 | 6,2 | 0,047 |
| 7 | 1200 | 0,10 | 0,68 | 3,5 | 0,060 |

Beim Färbetest zeigte sich, daß die Aktivschicht der Membran deutlich geringer angefärbt und daher funktionalisiert wurde als die Supportseite. Die Kontaktwinkel, gemessen an der Aktivschicht, waren praktisch identisch mit den entsprechenden Daten der unmodifizierten Membran.

### Beispiel 8 bis 10

Die in Beispiel 3 eingesetzte Ausgangsmembran wurde entsprechend dem Beispiel 2 mit einer Modifikator-Lösung bestehend aus 2 Teilen 1,6-Diaminohexan, 49 Teilen Wasser und 49 Teilen 1-Propanol mit folgenden Unterschieden so modifiziert, daß
- die Ausgangsmembran vor der Kontaktierung mit der Modifikator-Lösung mit dem Lösemittel der Modifizierung, bestehend aus 50 Teilen Wasser und 50 Teilen 1-Propanol, vollständig benetzt und in diesem Zustand zur Modifizierung eingesetzt wurde und
- die Membran von der Supportseite her mit der Modifikator-Lösung unterschiedliche Zeiten bei 70°C kontaktiert wurde.

Die so modifizierten Membranen wiesen die in Tabelle 2 zusammengestellten Kenndaten auf:

**Tabelle 2:**

| Kenndaten der nach den Beispielen 8 bis 10 modifizierten Membranen: | | | | |
|---|---|---|---|---|
| Beispiel | Behandlungszeit (sec) | Wasserdurchlässigkeit l/m² hkPa | mittlere Porengröße (nm) | cut-off (kg/mol) |
| 1 Vergleich | 0 | 2,43 | 2,58 | 70,4 |
| 8 | 30 | 2,26 | 2,75 | 35,4 |
| 9 | 300 | 1,50 | 2,34 | 33,7 |
| 10 | 600 | 1,80 | 3,12 | 52,4 |

Beim Färbetest zeigte sich, daß die Aktivschicht der Membran deutlich geringer angefärbt und daher funktionalisiert wurde als die Supportseite. Der Fortschreit- und Rückzugs-Kontaktwinkel dieser modifizierten Membran, gemessen an der Aktivschichtseite, war praktisch identisch mit den entsprechenden Winkeln der unmodifizierten Ausgangsmembran.

### Beispiel 11 bis 14:

Die oben beschriebene, innenschichtaktive, trockene PEI-Hohlmembran wurde zu einem Rohrbündelminimodul verarbeitet. Das äußere Kompartment des Moduls wurde mit der Modifikatorlösung, bestehend aus einer 50%-igen Polyethylenimin-Lösung in Wasser (Molekulargewicht: 750.000 g/mol), Wasser und 1-Propanol mit unterschiedlichen Polyethylenimingehalten, gefüllt. Das so vorbereitete Modul wurde 10 min bei 70°C in einem Trockenschrank temperaturbehandelt. Nach Entfernen der Modifikatorlösung erfolgte eine intensive Spülung beider Kompartimente der Hohlmembran des Moduls mit Wasser. Für die Modifizierung wurden Behandlungslösungen mit unterschiedlichen Modifikatorgehalt eingesetzt. Der so funktionalisierte Hohlmembranmodul wurde hinsichtlich der titrimetrisch bestimmbaren Amingehalte (Tabelle 3) und an ausgewählten Beispielen hinsichtlich der Trenneigenschaften der Hohlmembran (Tabelle 4) untersucht.

**Tabelle 3:**

| Beispiel | Modifikatorgehalt (Gew.-%) | Amin-Gehalt (mmol/g Polymer) |
|---|---|---|
| 1 (Ausgang) | - | 0 |
| 11 (Vergleich) | 0 | 0 |
| 12 | 0,5 | 0,0684 |
| 13 | 1 | 0,0735 |
| 14 | 2 | 0,0788 |

**Tabelle 4:**

| Beispiel | Wasserfluß (ml/m² hkPa) | Mittlere Porengröße (nm) | cut-off (kDa) |
|---|---|---|---|
| 1 (Ausgang) | 2370 | 3,23 | 20,3 |
| 11 (Vergleich) | 1740 | 2,44 | 8,3 |
| 12 | 405 | 2,85 | 10,7 |
| 14 | 710 | 3,96 | 18,4 |

## Patentansprüche

1. Poröser Polyimid-Formkörper, insbesondere Polyimid-Membran, der bzw. die mit einer chemischen Gruppe funktionalisiert ist, dadurch erhältlich, dass als Ausgangsmaterial ein zuvor fertig gestellter poröser Polyimid-Forwkörper mit einer wässrigen Modifikator-Lösung für einen Zeitraum von 1 sec bis 1 h in Kontakt gebracht wird, die Modifikator-Lösung mindestens eine darin zumindest teilweise gelöste Modifikator-Substanz enthält, die eine primäre oder sekundäre Aminogruppe oder eine derartige Aminogruppe sowie zusätzlich mindestens eine weitere funktionelle Gruppe pro Molekül aufweist, und der Polyimid-Formkörper während oder nach dem in Kontakt bringen mit der Modifikator-Lösung auf eine erhöhte Temperatur gebracht wird und anschließend gereinigt und getrocknet wird.

2. Polyimid-Formkörper nach Anspruch 1, dadurch erhältlich, daß eine oder mehrere der folgenden Maßnahmen durchgeführt wird: der Polyimid-Formkörper wird 5 sec bis 10 min mit der Modifikator-Lösung in Kontakt gebracht wird, der Polyimid-Formkörper wird 1 sec bis 1 h und insbesondere 5 sec bis 10 min auf eine Temperatur von 50 bis 100°C und insbesondere von 70 bis 90°C erhitzt und der Polyimid-Formkörper wird zum Reinigen in an sich bekannter Weise durch Waschen, Extrahieren etc mit Wasser gewaschen.

3. Polyimid-Formkörper nach einem der vorhergehenden Ansprüche, dadurch erhältlich, daß die Konzentration der Modifikator-Substanz(en) in der Modifikator-Lösung 0,1 bis 20 Gew.-% und insbesondere 1 bis 10 Gew.-% beträgt.

4. Polyimid-Formkörper nach einem der vorhergehenden Ansprüche, dadurch erhältlich, daß die Modifikator-Substanzen den folgenden allgemeinen Formeln
R₁ - NH - (Y₁)ₙ
R₁ - NH - X - (Y₂)ₘ,
worin R1 ein Wasserstoffatom oder einen aliphatischen oder aromatischen Kohlenwasserstoffrest mit bis zu 6 C-Atomen bedeutet, Y₁ einen Kohlenwasserstoffrest mit 6 oder mehr C-Atomen bedeutet, Y₂ für eine -NH₂-, -NHR₁-, -NH(R₂)₂-, -OH-, -CH₂OH-, -CO(OH)-, -SO₂(OH)-, oder -PO₃(OH)-Gruppe oder fluorierte Gruppe, wobei R₂ eine aliphatischen oder aromatischen Kohlenwasserstoffrest beliebiger Art bedeutet und insbesondere für R₁ steht, X einen geradkettigen oder verzweigten Kohlenwasserstoffrest, der die R₁-NH-Gruppe mit der oder den (Y₂)-Gruppe(n), die endständig oder seitlich an eine Kette gebunden sein können, verbindet und in einer Seitenkette und/oder der Hauptkette durch ein oder mehrere O- oder N-Heteroatome unterbrochen sein kann, n für 1 oder 2 steht und m für 1, 2 oder 3 steht, entsprechen.

5. Polyimid-Formkörper nach einem der vorhergehenden Ansprüche in Form einer Polyimid-Membran, dadurch erhältlich, daß eine asymmetrische Polyimid-Membran als Ausgangsmaterial eingesetzt wird.

6. Polyimid-Formkörper nach Anspruch 5 in Form einer Polyimid-Membran, dadurch erhältlich, daß die Porengröße der asymmetrische Polyimid-Membran in der trennaktiven Schicht kleiner ist als die Größe der Modifikator-Substanz.

7. Polyimid-Formkörper nach Anspruch 5 oder 6 in Form einer Polyimid-Membran, dadurch erhältlich, daß die Polyimid-Membran von der Support-Seite her mit der Modifikator-Lösung in Kontakt gebracht wird.

8. Polyimid-Formkörper nach einem der vorhergehenden Ansprüche in Form einer Polyimid-Membran, dadurch erhältlich, daß eine trockene Polyimid-Membran als Ausgangsmaterial eingesetzt wird.

9. Polyimid-Formkörper nach einem der Ansprüche 1 bis 4 in Form einer Polyimid-Membran, dadurch erhältlich, daß eine Polyimid-Membran als Ausgangsmaterial eingesetzt wird, deren Porensystem mit einer gut benetzenden und insbesondere wäßrigen Lösung gefüllt ist.

10. Verfahren zur Herstellung eines porösen Polyimid-Formkörpers, einschließlich einer Polyimid-Membran, **dadurch gekennzeichnet, dass** die Im Anspruch 1 beschriebenen Maßnahmen sowie gegebenenfalls mindestens eine der in den Ansprüchen 2 bis 9 beschriebenen Maßnahmen durchgeführt werden.

## Claims

1. Porous polyimide mould, in particular a polyimide membrane, which is functionalised with a chemical group, which can be obtained in that as a starting material a previously finished porous polyimide mould is brought into contact with an aqueous modifier solution for a period of 1 sec to 1 hr, the modifier solution contains at least one modifier substance which is at least partially dissolved therein, which comprises a primary or secondary amino group or such an amino group and additionally at least one further functional group per molecule, and the polyimide mould is brought to an increased temperature during or after the bringing into contact with the modifier solution and subsequently purified and dried.

2. Polyimide mould according to claim 1 which can be obtained in that one or more of the following measures is / are carried out: the polyimide mould is brought into contact with the modifier solution for 5 sec to 10 min, the polyimide mould is heated for 1 sec to 1 hr and in particular 5 sec to 10 min to a temperature of 50 to 100°C and in particular of 70 to 90°C and the polyimide mould is washed with water for purification in the known way through washing, extracting, etc.

3. Polyimide mould according to one of the preceding claims which can be obtained in that the concentration of the modifier substance(s) in the modifier solution is 0.1 to 20% by weight and in particular 1 to 10% by weight.

4. Polyimide mould according to one of the preceding claims which can be obtained in that the modifier substances have the following formulae
R₁ - NH - (Y₁)ₙ
R₁ - NH - X - (Y₂)ₘ,
whereby R1 is a hydrogen atom or an aliphatic or aromatic hydrocarbon residue with up to 6 C atoms, Y₁ is a hydrocarbon residue with 6 or more C atoms, Y₂ is a NH₂ or NHR₁, NH(R₂)₂, OH, CH₂OH, CO(OH), SO₂(OH) or PO₃(OH) group or fluoridated group, whereby R₂ is an aliphatic or aromatic hydrocarbon residue of any type and stands in particular for R₁, X is a straight-chain or branched hydrocarbon residue which connects the R₁-NH group with the (Y₂) group(s) which can be linked at the end or on the side to a chain, and can be interrupted in a side chain and / or the main chain through one or more O or N heteroatoms, n stands for 1 or 2 and m for 1, 2 or 3.

5. Polyimide mould according to one of the preceding claims in the form of a polyimide membrane which can be obtained in that an asymmetrical polyimide membrane is used as a starting material.

6. Polyimide mould according to claim 5 in the form of a polyimide membrane which can be obtained in that the pore size of the asymmetrical polyimide membrane is smaller in the separation-active layer than the size of the modifier substance.

7. Polyimide mould according to claim 5 or 6 in the form of a polyimide membrane which can be obtained in that the polyimide membrane is brought into contact with the modifier solution from the support side.

8. Polyimide mould according to one of the preceding claims in the form of a polyimide membrane which can be obtained in that a dry polyimide membrane is used as a starting material.

9. Polyimide mould according to one of the claims 1 to 4 in the form of a polyimide membrane which can be obtained in that a polyimide membrane is used as a starting material, the pore system of which is filled with a solution with good wetting properties and in particular an aqueous solution.

10. Method for producing a porous polyimide mould including a polyimide membrane, **characterised in that** the measures described in claim 1 and at least one of the measures described in the claims 2 to 9 are carried out.

## Revendications

1. Corps moulé poreux en polyimide, notamment membrane en polyimide, qui est fonctionnalisé par un groupe chimique et qui peut être obtenu par la mise en contact, comme matériau de départ, d'un corps moulé poreux en polyimide préalablement finalisé et d'une solution aqueuse d'agent modificateur pendant une période allant de 1 seconde à 1 heure, la solution d'agent modificateur contenant au moins une substance modificatrice qui y est au moins partiellement dissoute et qui présente un groupe amino primaire ou secondaire ou bien un groupe amino de ce type ainsi qu'au moins un autre groupe fonctionnel supplémentaire par molécule, et que l'on porte le corps moulé en polyimide à une température élevée lors ou à la suite de la mise en contact avec la solution d'agent modificateur puis qu'on le nettoie et qu'on le sèche.

2. Corps moulé en polyimide selon la revendication 1, pouvant être obtenu par le fait que l'on conduit une ou plusieurs des mesures suivantes : on met en contact le corps moulé en polyimide entre 5 secondes et 10 minutes avec la solution d'agent modificateur, on porte le corps moulé en polyimide entre 1 seconde et 1 heure et notamment entre 5 secondes et 10 minutes à une température allant de 50 à 100 °C et notamment de 70 à 90 °C et on nettoie le corps moulé en polyimide de manière connue en soi par lavage, extraction, etc. avec de l'eau.

3. Corps moulé en polyimide selon l'une des revendications précédentes, pouvant être obtenu par le fait que la concentration en substance(s) modificatrice(s) dans la solution d'agent modificateur va de 0,1 à 20 % en poids et notamment de 1 à 10 % en poids.

4. Corps moulé en polyimide selon l'une des revendications précédentes, pouvant être obtenu par le fait que les substances modificatrices correspondent aux formules générales suivantes
R₁ - NH - (Y₁)ₙ
R₁ - NH - X - (Y₂)ₘ,
dans lesquelles R₁ représente un atome d'hydrogène ou un radical hydrocarboné aliphatique ou aromatique comportant jusqu'à 6 atomes de carbone, Y₁ représente un radical hydrocarboné comportant 6 atomes de carbone ou plus, Y₂ représente un groupe -NH₂-, -NHR₁-, -NH(R₂)₂-, -OH-, -CH₂OH-, -CO(OH)-, -SO₂(OH)-, ou -PO₃(OH)- ou un groupe fluoré, R₂ représente un radical hydrocarboné aliphatique ou aromatique de tout type et notamment R₁, X représente un radical hydrocarboné à chaîne linéaire ou ramifiée reliant le groupe R₁-NH- au(x) groupe(s) (Y₂)-qui peut (peuvent) se situer en fin de chaîne ou latéralement sur une chaîne, et pouvant être interrompu dans une chaîne latérale et/ou principale par un ou plusieurs hétéroatomes d'oxygène ou d'azote, n vaut 1 ou 2 et m vaut 1, 2 ou 3.

5. Corps moulé en polyimide selon l'une des revendications précédentes, sous la forme d'une membrane en polyimide pouvant être obtenue par l'utilisation, comme matériau de départ, d'une membrane en polyimide asymétrique.

6. Corps moulé en polyimide selon la revendication 5, sous la forme d'une membrane en polyimide pouvant être obtenue par le fait que la dimension des pores de la membrane asymétrique en polyimide dans la couche active de séparation est inférieure à la dimension de la substance modificatrice.

7. Corps moulé en polyimide selon la revendication 5 ou 6, sous la forme d'une membrane en polyimide pouvant être obtenue par la mise en contact de la membrane en polyimide avec la solution d'agent modificateur par sa face de support.

8. Corps moulé en polyimide selon l'une des revendications précédentes, sous la forme d'une membrane en polyimide pouvant être obtenue par l'utilisation comme matériau de départ d'une membrane en polyimide sèche.

9. Corps moulé en polyimide selon l'une des revendications 1 à 4, sous la forme d'une membrane en polyimide pouvant être obtenue par l'utilisation comme matériau de départ d'une membrane en polyimide dont le système de pores est rempli d'une solution permettant un bon mouillage et notamment d'une solution aqueuse.

10. Procédé de fabrication d'un corps moulé poreux en polyimide, y compris d'une membrane en polyimide, **caractérisé en ce que** l'on met en oeuvre les mesures décrites dans la revendication 1 ainsi qu'éventuellement au moins l'une des mesures décrites dans les revendications 2 à 9.
